# EUROPÄISCHE PATENTSCHRIFT

(11) **EP 1 110 365 B1**
(45) Veröffentlichungstag und Bekanntmachung des Hinweises auf die Patenterteilung: **26.07.2006**
(21) Anmeldenummer: 99953558.6
(22) Anmeldetag: 20.08.1999
(51) Int. Cl.: H04M 1/02, H04M 1/23

(54) **GEHÄUSEOBERTEIL FÜR EIN KOMMUNIKATIONSENDGERÄT**
TOP PART OF A HOUSING FOR A COMMUNICATIONS TERMINAL
PARTIE SUPERIEURE DE BOITIER POUR UN TERMINAL DE TELECOMMUNICATION

(30) Priorität: 31.08.1998 DE 19839607
(43) Veröffentlichungstag der Anmeldung: 27.06.2001
(73) Patentinhaber: SIEMENS AKTIENGESELLSCHAFT, 80333 München (DE)
(72) Erfinder: EBERLE, Erwin, D-82140 Olching (DE)
(86) Internationale Anmeldenummer: PCT/DE1999/002624
(87) Internationale Veröffentlichungsnummer: WO 2000/013396

(56) Entgegenhaltungen:
- DE-A- 4 309 907
- DE-A- 4 325 078
- DE-A- 19 645 675
- DE-A- 19 728 260
- DE-U- 9 217 374
- US-A- 5 359 658

## Beschreibung

Die vorliegende Erfindung betrifft ein Gehäuseoberteil für ein Kommunikationsendgerät.

Kommunikationsendgeräte, welche unter schwierigen Bedingungen in einem Outdoor-Betrieb betrieben werden sollen, müssen staubdicht und strahlwasserfest sein. Dies gilt insbesondere für die Tastatur des Kommunikationsendgerätes. Erreicht wird die Staubdichtigkeit bzw. die Strahlwasserfestigkeit bei bekannten Kommunikationsendgeräten meist mit Hüllen, Schutzfolien oder dergleichen, welche das Endgerät ganz oder teilweise umgeben, wodurch der Bedienungskomfort allerdings erheblich eingeschränkt wird.

Aufgabe der vorliegenden Erfindung ist es, ein Kommunikationsendgerät anzugeben, welches staubdicht und strahlwasserfest ist, und dessen Tastatur gleichzeitig einen hohen Bedienungskomfort ermöglicht.

Zur Lösung dieser Aufgabe ist ein erfindungsgemäßes Gehäuseoberteil für ein Kommunikationsendgerät gekennzeichnet durch eine Gehäuseoberschale aus einem Hartkunststoffmaterial mit Durchbrüchen zur Ermöglichung entsprechender Tastenfunktionen und eine mit dieser fest verbundenen Tastaturbereichsabdeckung aus einem Weichkunststoffmaterial, wobei jeweils ein Ende von den einzelnen Tastenfunktionen zugeordneten Tastenstößeln zur Betätigung von Kontakten einer Schaltmatte innerhalb des Weichkunststoffmaterials gehalten ist.

Das erfindungsgemäße Gehäuseoberteil ist staubdicht und strahlwasserfest und bietet den herkömmlichen Bedienungskomfort. Das Gehäuseoberteil besteht aus zwei Materialien, einer Hartkomponente und einer elastischen Weichkomponente. Mit der Hartkomponente werden die Gehäusefunktionen und mit der Weichkomponente die Tastaturfunktionalität realisiert.

Aus der DE 196 45 675 A1 ist eine Schalteinrichtung, bei welcher Tasten mittels einer elastischen Folie abgedeckt sind, jedoch werden bei dieser Schalteinrichtung die Tasten nicht innerhalb des Folienmaterials gehalten.

Aus der DE 43 09 907 A1 ist weiterhin eine Tastatur bekannt, bei welcher eine Gehäuseschale mit Durchbrüchen für die Tasten versehen ist, jedoch geht es bei dieser bekannten Tastatur darum, diese so auszugestalten, dass eine Bestückung der unter der Tastatur angeordneten Leiterplatte möglich ist.

Darüber hinaus ist aus der US 5 359 658 A eine Abdeckung für eine Tastatur bekannt. Diese dient jedoch lediglich als temporäre Schablone, um den Tasten vorübergehend andere Bedeutungen zuzuweisen.

Eine zweckmäßige Ausgestaltung des erfindungsgemäßen Gehäuseoberteils ist dadurch gekennzeichnet, daß die Tastaturbereichsabdeckung zur Bildung der einzelnen Tasten im Tastenbereich derart erhöht ist, daß die einzelnen die Tasten bildenden Erhebungen kegelstumpfförmig ausgebildet sind, wobei die Dicke der Kegelwandung dünner als die Dicke der übrigen Abdeckung ist. Durch die Erhebungen, welche mit der Weichkomponente geschaffen werden, ist ein hoher Bedienungskomfort der Tastatur gewährleistet.

Ein besonders kostengünstiges Verfahren zur Herstellung des erfindungsgemäßen Gehäuseoberteils ist dadurch gekennzeichnet, daß in einem ersten Fertigungsschritt aus einem Hartkunststoffmaterial eine Gehäuseoberschale mit Durchbrüchen für die Tasten gespritzt wird, daß in einem zweiten Fertigungsschritt aus einem Hartkunststoffmaterial Tastenstößel hergestellt werden, daß in einem dritten Fertigungsschritt die Gehäuseoberschale in ihrem Tastenbereich mit einem Weichkunststoffwerkstoff zur Bildung einer durchgehenden Tastaturbereichsabdeckung hinterspritzt wird, wobei während des Spritzvorgangs die Tastenstößel unterhalb der Tasten positioniert gehalten werden, so dass ein Ende von den einzelnen Tastenfunktionen zugeordneten Tastenstößeln zur Betätigung von Kontakten einer Schaltmatte innerhalb des Weichkunststoffmaterials gehalten ist.

Durch die Produktion des Gehäuseoberteils mittels der Mehrkomponenten-Spritzgußtechnik kann das Gehäuseoberteil kostengünstig in seiner gesamten Funktionalität in einem Spritzgußprozeß gefertigt werden.

Nachfolgend wird die Erfindung anhand eines in der Zeichnung dargestellten Ausführungsbeispiels näher beschrieben.

### Es zeigen

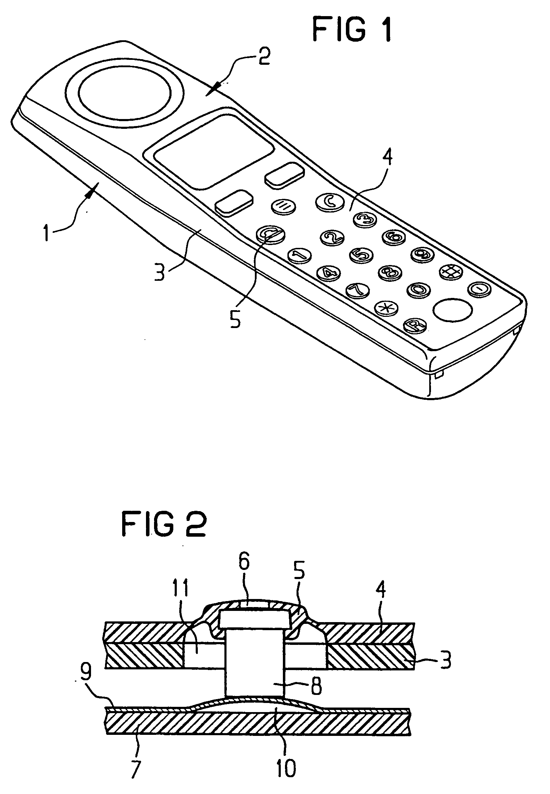

Figur 1 eine perspektivische Ansicht eines Kommunikationsendgerätes mit einem Gehäuseoberteil gemäß der vorliegenden Erfindung, und

Figur 2 einen teilweisen Querschnitt durch ein erfindungsgemäßes Gehäuseoberteil.

Das erfindungsgemäße Gehäuseoberteil 2 für ein Kommunikationsendgerät 1 besteht im wesentlichen aus der Gehäuseoberschale 3 und der Tastaturbereichsabdeckung 4. Die Gehäuseoberschale 3 besteht aus einem Hartkunststoffmaterial, während die Tastaturbereichsabdeckung 4 aus einem Weichkunststoffmaterial besteht. Die Gehäuseoberschale 3 weist Durchbrüche 11 auf, um die einzelnen Tastenfunktionen zu ermöglichen.

Durch diese Durchbrüche ragen Tastenstößel 8 hindurch, welche mit einer Taste 5 fest verbunden sind, wobei die Taste 5 Bestandteil der Tastaturbereichsabdeckung 4 ist. Das untere Ende der Tastenstößel 8 dient zur Betätigung einer Kontaktstelle 10 einer Schaltmatte 9, welche auf einer Leiterplatte 7 im Inneren des Kommunikationsendgerätes 1 angeordnet ist.

Der obere freie Teil der Tastenstößel 8 wird in dem die Tastenbereichsabdeckung 4 bildenden Weichkunststoffmaterial gehalten. Zur Bildung der einzelnen Tasten 5 weist die Tastaturbereichsabdeckung 4 im Tastenbereich die einzelnen Tasten bildende Erhebungen auf, welche kegelstumpfförmig ausgebildet sind. Dabei sind die kegelstumpfförmigen Erhebungen so ausgebildet, daß die Dicke der Kegelwandungen dünner als die Dicke der übrigen Abdeckung 4 ist. Auf diese.Weise wird ein guter Bedienungskomfort der einzelnen Tasten 5 erreicht.

Das in dem Weichkunststoffmaterial gehaltene Ende eines Tastenstößels 8 kann als Tastensymbol 6 ausgebildet sein, wobei die Tastenstößel 8 in dem Weichkunststoffmaterial derart gehalten werden, daß die Tastensymbole 8 an der Oberfläche der Tastaturbereichsabdeckung 4 gut sichtbar sind.

Das erfindungsgemäße Gehäuseoberteil ist mittels eines Mehrkomponenten-Spritzgußverfahrens sehr kostengünstig herstellbar, welches dadurch gekennzeichnet ist, daß in einem ersten Fertigungsschritt aus einem Hartkunststoffmaterial eine Gehäuseoberschale 3 mit Durchbrüchen für die Tasten 5 gespritzt wird, in einem zweiten Fertigungsschritt aus einem Hartkunststoffmaterial Tastenstößel 8 hergestellt werden, in einem dritten Fertigungsschritt die Gehäuseoberschale 3 in ihrem Tastenbereich mit einem Weichkunststoffwerkstoff zur Bildung einer durchgehenden Tastenbereichsabdeckung 4 hinterspritzt wird, wobei während des Spritzvorgangs die Tastenstößel unterhalb der Tasten 5 positioniert gehalten werden.

## Patentansprüche

1. Gehäuseoberteil für ein Kommunikationsendgerät, **gekennzeichnet durch** eine Gehäuseoberschale (3) aus einem Hartkunststoffmaterial mit Durchbrüchen zur Ermöglichung entsprechender Tastenfunktionen und eine mit dieser fest verbundene Tastaturbereichsabdeckung (4) aus einem Weichkunststoffmaterial, wobei jeweils ein Ende von den einzelnen Tastenfunktionen zugeordneten Tastenstößeln (8) zur Betätigung von Kontakten (10) einer Schaltmatte (9) innerhalb des Weichkunststoffmaterials gehalten ist.

2. Gehäuseoberteil nach Anspruch 1,
**dadurch gekennzeichnet,**
**daß** die Tastaturbereichsabdeckung (4) zur Bildung der einzelnen Tasten (5) im Tastenbereich derart erhöht ist, daß die einzelnen die Tasten bildenden Erhebungen kegelstumpfförmig ausgebildet sind, wobei die Dicke der Kegelwandungen dünner als die Dicke der übrigen Abdeckung (4) ist.

3. Gehäuseoberteil nach Anspruch 1 oder 2,
**dadurch gekennzeichnet,**
**daß** die in dem Weichkunststoffmaterial gehaltenen Enden der Tastenstößel (8) als Tastensymbole (6) ausgebildet sind und die Tastenstößel (8) in dem Weichkunststoffmaterial derart gehalten sind, daß die Tastensymbole (6) an der Oberfläche der Tastaturbereichsabdeckung (4) sichtbar sind.

4. Verfahren zur Herstellung eines Gehäuseoberteils für ein Kommunikationsendgerät nach Anspruch 1 bis 3,
**dadurch gekennzeichnet,**
**daß** in einem ersten Fertigungsschritt aus einem Hartkunststoffmaterial eine Gehäuseoberschale (3) mit Durchbrüchen für die Tasten (5) gespritzt wird,
**daß** in einem zweiten Fertigungsschritt aus einem Hartkunststoffmaterial Tastenstößel (8) hergestellt werden,
**daß** in einem dritten Fertigungsschritt die Gehäuseoberschale (3) in ihrem Tastenbereich mit einem Weichkunststoffwerkstoff zur Bildung einer durchgehenden Tastaturbereichsabdeckung (4) hinterspritzt wird, wobei während des Spritzvorgangs die Tastenstößel (8) unterhalb der Tasten (5) positioniert gehalten werden, so dass ein Ende von den einzelnen Tastenfunktionen zugeordneten Tastenstößeln (8) zur Betätigung von Kontakten (10) einer Schaltmatte (9) innerhalb des Weichkunststoffmaterials gehalten ist.

## Claims

1. Top part of a housing for a communications terminal, **characterized by** a top shell (3) of the housing that is made of a hard plastics material with openings to permit corresponding key functions and a cover (4) for the keypad area that is solidly connected to the said shell and is made of a soft plastics material, one end of each of the key plungers (8) that are assigned to individual key functions for actuating contacts (10) of a switching mat (9) being held within the soft plastics material.

2. Top part of a housing according to Claim 1, **characterized in that**, to form the individual keys (5), the cover (4) for the keypad area is raised in the key area in such a way that the individual elevations forming the keys are formed in a frustoconical manner, the thickness of the cone walls being thinner than the thickness of the remaining cover (4).

3. Top part of a housing according to Claim 1 or 2, **characterized in that** the ends of the key plungers (8) that are held in the soft plastics material are formed as key symbols (6) and the key plungers (8) are held in the soft plastics material in such a way that the key symbols (6) are visible on the surface of the cover (4) for the keypad area.

4. Method for producing a top part of a housing for a communications terminal according to Claims 1 to 3, **characterized in that**, in a first production step, a top shell (3) of the housing with openings for the keys (5) is injection-moulded from a hard plastics material, **in that**, in a second production step, key plungers (8) are produced from a hard plastics material and **in that**, in a third production step, the top shell (3) of the housing is provided in its key area with a soft plastics material by injection in-mould lamination to form a continuous cover (4) for the key area, the key plungers (8) being held in position under the keys (5) during the injection-moulding operation, so that one end of the key plungers (8) that are assigned to individual key functions for actuating contacts (10) of a switching mat (9) is held within the soft plastics material.

## Revendications

1. Partie supérieure de boîtier pour un terminal de télécommunication, **caractérisée par** une coque supérieure (3) de boîtier constituée d'une matière plastique dure, comprenant des ouvertures, pour permettre des fonctions de touches (8) correspondantes, et un couvercle (4) de la partie en clavier, raccordé de manière fixe à celle-ci, constitué d'une matière plastique souple, une extrémité des poussoirs de touches attribués à chacune des touches étant respectivement maintenue à l'intérieur de la matière plastique souple pour l'actionnement de contacts (10) d'une natte de commutation (9).

2. Partie supérieure de boîtier selon la revendication 1,
**caractérisée en ce que**,
pour former les différentes touches, le couvercle (4) de la partie en clavier est surélevé dans la partie des touches (5), de telle manière que chacune des élévations formant les différentes touches est exécutée en forme de cône tronqué, l'épaisseur des parois de cône étant plus mince que l'épaisseur du reste du couvercle (4).

3. Partie supérieure de boîtier selon la revendication 1 ou 2,
**caractérisée en ce que**
les extrémités des poussoirs de touches (8), maintenues dans la matière plastique souple, sont exécutées comme symboles de touches (6) et **en ce que** les poussoirs de touches (8) sont maintenus dans la matière plastique souple de telle manière que les symboles de touche (6) sont visibles sur la surface du couvercle (4) de la partie en clavier.

4. Procédé de fabrication d'une partie supérieure de boîtier pour un terminal de télécommunication, selon les revendications 1 à 3,
**caractérisé en ce que**, dans une première étape de fabrication, une coque supérieure (3) de boîtier, constituée d'une matière plastique dure, comprenant des ouvertures pour les touches (5) est injectée,
**en ce que**, dans une deuxième étape de fabrication, des poussoirs de touches (8) sont fabriqués dans une matière plastique dure,
**en ce que**, dans une troisième étape de fabrication, la coque supérieure (3) de boîtier est injectée par l'arrière dans sa partie des touches avec un matériau en matière plastique souple pour former un couvercle (4) continu de la partie des touches, les poussoirs de touche (8) étant maintenus en position en dessous des touches (5) pendant l'opération d'injection, de sorte qu'une extrémité des poussoirs de touches (8) affectés aux différentes fonctions des touches est maintenue à l'intérieur de la matière plastique souple pour actionner des contacts (10) d'une natte de commutation (9).
